# EUROPEAN PATENT APPLICATION

(11) **EP 0 571 679 A1**
(43) Date of publication of application: **01.12.1993**
(21) Application number: 92308967.6
(22) Date of filing: 01.10.1992
(51) Int. Cl.: B65B 9/06, B65B 53/02, B65B 51/30

(54) **Shrunk package manufacturing method and package produced thereby**

(30) Priority: 27.05.1992 JP 135274/92
(71) Applicant: HANAGATA CORPORATION, Toyama-shi, Toyama-ken (JP)
(72) Inventor: Hanagata, Toshiyuki, Toyama-shi, Toyama-ken (JP)
(74) Representative: Waldren, Robin Michael

(57) **Abstract**

A sealed shrunk package (3-1) is manufactured by the steps of wrapping an article (3) with a plastic film (12) fusible and shrinkable under heat, sealing the plastic film (12) at predetermined staggering seal points adjacent to at least one side of the article (3), cutting the plastic film (12) along a predetermined line adjacent to and outside the predetermined staggering seal points and then treating the plastic film (12) by a thermal shrinking process. During the thermal shrinking process, air is extracted via the non-seal portions of the film (12), and upon completion of the thermal shrinking process, the non-seal portions are perfectly closed by the seal portions confronting the non-seal portions.

## Description

This invention relates to a method of manufacturing a shrunk package from a wrapping plastic film fusible and shrinkable under heat, and more particularly to a shrunk package manufacturing method in which air can be extracted excellently from the package during the thermal shrinking process and, upon completion of the thermal shrinking process, the package can be kept airtight. The invention also relates to a package produced by such method.

### 2. Description of the Related Art:

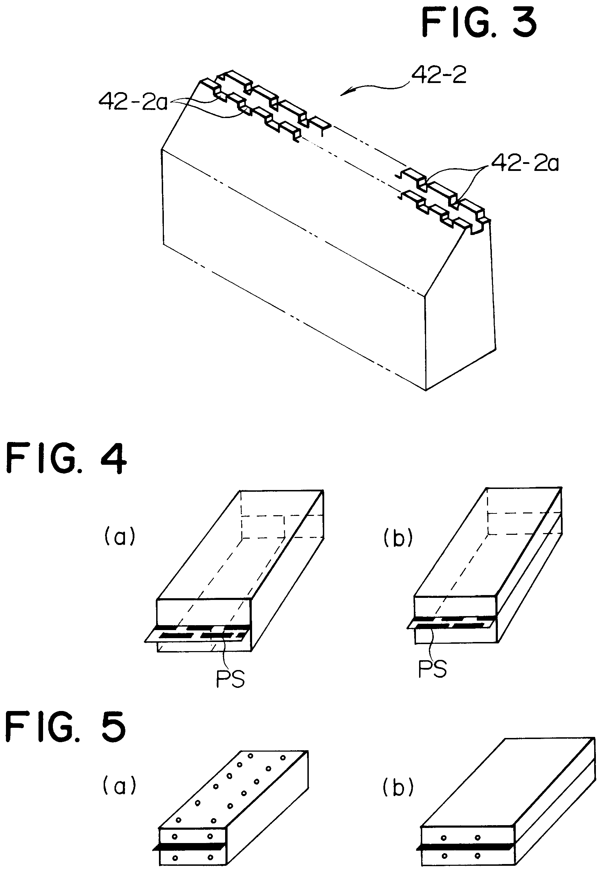

Hitherto, when an article is packaged with a thermally shrinking plastic film manually or by an automatic packaging machine, the plastic film wrapping over the article in a package has a plurality of air-escaping holes entirely or in part, as shown in FIGS. 5(a) and 5(b), before a thermal shrinking process in which air existing in the package is extracted via the holes and, at the same time, the plastic film is shrunk to adhere closely to the entire surface of the article, whereupon the holes of the plastic film are closed by attaching a label or the like to the film surface from a sanitary view point.

However the conventional method requires additional steps such as of forming the holes in the film previously and attaching a label to the package after the thermal shrinking process, thus increasing the cost of production. Further, the package produced by the conventional method is disadvantageous in that the label closing the air-escaping holes is apt to be peeled off so that dust, bugs, germs, etc. are allowed to penetrate into the package from the peeled portion via the holes, thus causing appearance and sanitary problems.

It is therefore an object of this invention to provide a shrunk package manufacturing method in which air can be extracted via air-escaping holes, without any problem, during a thermal shrinking process and in which the air-escaping holes can be automatically closed at the end of the thermal shrinking process.

Another object of the invention is to provide a shrunk package having in its surface no air-escaping hole, which not only presents an excellent external appearance but also prevents anything harmful from penetrating into the package from outside.

According to a first aspect of the invention, there is provided a method of manufacturing a sealed and shrunk package, comprising the steps of: wrapping an article with a plastic film fusible and shrinkable under heat; sealing the plastic film at predetermined staggering seal points adjacent to at least one side of the article; cutting the plastic film along a predetermined line adjacent to and outside the predetermined staggering seal points; and then treating the plastic film by a thermal shrinking process.

According to a second aspect of the invention, there is provided a sealed and shrunk package wrapping an article with a plastic film sealed at staggering seal points adjacent to at least one side of the article and thermally shrunk.

For producing this shrunk package by a packaging machine, first a leading end of a two-fold film drawn from a plastic film roll is applied over a front end of a former and is forced into an inlet of the former. Then the two-fold film is opened reversely within the former, and the two sheets of films are aligned at each of opposite side edges along the upper surface of a closure strip as the opposite side edges of the films are inserted under a conveyer belt. Keeping this posture, the leading end of the two-fold film is further drawn until the leading film end passes under a sealing unit from the front end of the former.

In the film set in this manner, the folding line extends as a perpendicular line of an equilateral triangle and is hence located centrally in the width of the former. At the same time the film is bent forwardly along the diagonal edge of the inlet of the former in a stable engagement therewith so that the equilateral triangle of the film is prevented from being deformed and hence the film is prevented from being displayed sideways, thus maintaining the proper open posture of the film.

Now as the packaging machine is started, a leading article on a supply belt located on the upstream side of the former is moved onto the conveyer belt extending in and through the former. As the conveyer belt is driven, the article carried on the conveyer belt enters the tubular film opened by the former and continues moving forwardly in the film. While the article passes the conveyer belt, the opened two-fold film is sealed progressively in the forward direction as the opposite side edges are respectively fused by a longitudinal sealing unit.

Then when the article passes a transverse sealing unit, the transverse sealing unit and a cutter go into action and, at the same time, a point sealing unit located adjacent to and downstream of a fusing member of the transverse sealing unit in parallel thereto also goes into action to fuse the film transversely at intervals.

By the actions of the transverse sealing unit and the point sealing unit, the film containing the preceding article is sealed along a transversely linear series of seal points adjacent to the upstream end of the article and, at the same time, the film is cut transversely adjacent to and on the upstream side of the seal point series by a cutter of the transverse sealing unit. Simultaneously, on the upstream side of cutter, the leading end of the film containing the succeeding article is perfectly sealed as fused by the fusing member of the transverse sealing unit.

Therefore, as the film passes the transverse sealing unit and the point sealing unit, the film of the resulting package is thus perfectly sealed at one end as continuously fused, while the film is sealed at points adjacent to the other end of the article.

Then the package is conveyed into a heat tunnel where the film is shrunk under heat to adhere closely to the entire surface of the package as air inside the film is extracted via the non-sealed portions of the point-sealed region. At that time the point-sealed region of the film are shrunk by the thermal shrinking process so that the non-sealed portions are closed at the final stage of the thermal shrinking process, thus effectively preventing any harmful thing such as dust from penetrating into the package.
FIG. 1 is a fragmentary perspective view of an automatic packaging machine, using a two-fold film, according to a typical embodiment of this invention;
FIG. 2 is an enlarged side view of a main portion of the packing machine;
FIG. 3 is a fragmentary enlarged perspective view of a typical seal bar of a point sealing unit of the packaging machine as viewed from the fusing surface;
FIGS. 4(a) and 4(b) are schematic perspective views each showing the package before a thermal shrinking process, chiefly showing a point-sealed portion of the package; and
FIGS. 5(a) and 5(b) are perspective views each showing a shrunk package according to a conventional art.

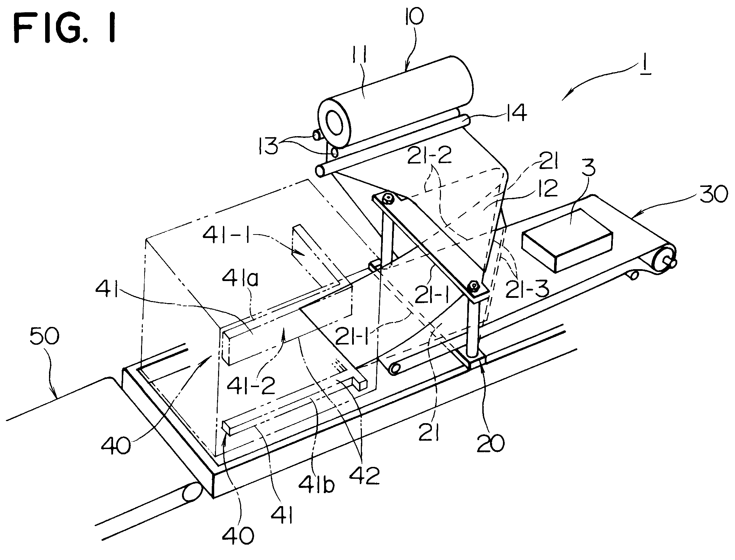

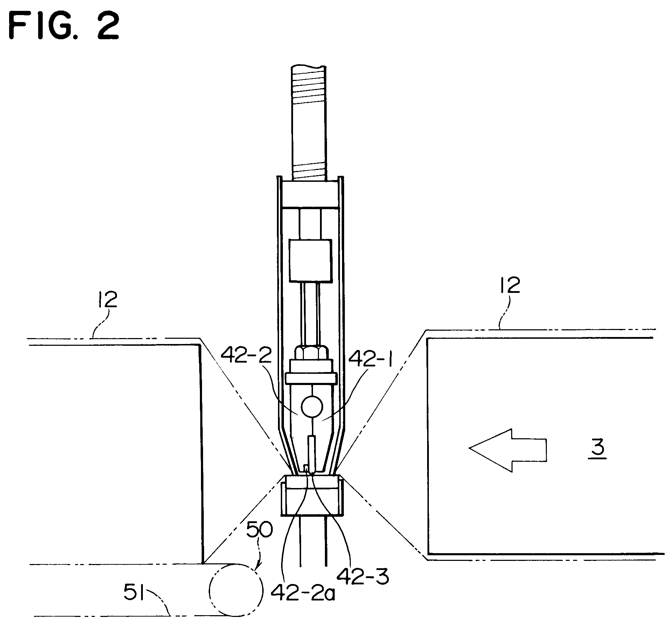

An automatic packaging machine suitable in manufacturing a shrunk package according to this invention will now be described with reference to the accompanying drawings. FIG. 1 is a fragmentary perspective view of a typical automatic packaging machine in which a two-fold film is to be used; FIG. 2 is an enlarged side view of a main portion of the packaging machine; and FIG. 3 is a perspective view of a point seal bar of the packaging machine as viewed from the fusing surface.

In FIGS. 1 through 3, reference numeral 1 designates the automatic packaging machine using a two-fold film. The packaging machine 1 comprises a film supply unit 10, a film inverting opening 20, an article supply unit 30, an L-shape sealer 40, a package discharge unit 50, and a non-illustrated heat tunnel.

In the film supply unit 10, a support roller 13 is supported on a non-illustrated machine frame and supports horizontally a film roll 11 including a two-fold film 12 is wound on a paper tube, for example, and a guide roller 14 is supported on the machine frame between the support roller 13 and the film inverting opening 20. As it is drawn from the film roll 11, the two-fold film reaches the film inverting opening 20 via the guide roller 14.

The film inverting opening 20 is defined jointly by a pair of generally equilateral right-angled triangular plates 21, 21 fixed horizontally to the frame with a predetermined space therebetween in such a manner that one 21-1, 21-1 of the two equal sides defining the right angle is a bottom side and that the other side 21-2, 21-2 confronts the guide roller 14 with an appropriate space therebetween. The separate portions of the two-fold film 12 are each bent inwardly along a diagonal side 21-3, 21-3, which subtends the right angle, of the respective triangular plate 21 so as to have a generally C-shape cross section. Then the thus bent film 12 is turned by 90 degrees and is supplied in the same direction as the conveying direction of an article 2 to be packaged.

The article supply unit 30, as shown in FIG. 1, may include a supply table disposed horizontally with one end portion projecting into the film inverting opening 20, and a conveyer belt extending from the front end of the supply table to a sealing portion of the L-shape sealer 40. The conveyer belt is driven intermittently in timed relation with the action of the L-shape sealer 40. The article supply unit 30 may be an alternative conveying means such as a chain, a roll conveyer or a slide table.

The L-shape sealer 40 includes a linear sealing portion for sealing the downstream end of the film 12 by fusing and for cutting the film 12 along a transverse line downstream of the sealed end portion, and a point sealing portion for fusing the film 12 at staggering seal points downstream of the last-mentioned sealed portion.

Specifically, in the illustrated embodiment, the L-shape sealer 40 has a pair of vertically spaced rectangular frames 41, 41 adapted to be disposed upwardly and downwardly, respectively, of the two-fold film 12 inverted by the film inverting opening 20 and being conveyed horizontally. An L-shape sealing portion 42 is provided on each of confronting surfaces of frame members 41-1, 41-1 of the two rectangular frames 41, 41. In this embodiment, the upper and lower frame members 41a, 41b can be vertically adjusted.

As shown in FIGS. 2 and 3, though the L-shape sealing portion 42 has a known basic structure, it has a special structure so as to obtain the package of this invention. The side frame 41-2 extending in the film flowing direction of the upper frame member 41a has a non-illustrated fusing bar extending in the same manner as conventional, and the upper transverse frame member 41-1 has a pair of fusing bars 42-1, 42-2 extending in the film flowing direction, there being located between the fusing bars 42-1, 42-2 a cutter 42-3 having a film cutting blade.

The upstream fusing bar 42-1 and the cutter 42-3 have the same structure as the conventional structure and jointly constitute a linear sealing potion having a continuous fusing surface. Whereas the downstream-side fusing bar (hereinafter called "point sealing bar") 42-2 has a unique structure of this invention and constitutes the point sealing portion.

FIG. 3 shows the downstream-side point sealing bar 42-2 having a structure suitable to carry out this method; the point sealing bar 42-2 has staggering cutouts 42-2a in the fusing surface. As it is fused by the point sealing bar 42-2, the film 12 is sealed at staggering seal points PS as shown in FIG. 4.

With this structure, as the L-shape sealing unit 42 acts on the two-fold film 12, the fusing bar 42-1 fusing the upstream side of the film 12 continuously and, at the same time, the cutter 42-3 cuts off the downstream side of the film 12. Simultaneously, downstream of the cut end, the film 12 is sealed at staggering points by the point sealing bar 42-2.

Downstream of the L-shape sealer 40 the package discharge unit 50 in the form of a discharge belt conveyer 51 is located as conventional. At a midportion of the package discharge unit 50 a non-illustrated heat tunnel is situated.

When it has been transferred onto the discharge belt conveyer 51 and is being discharged, the package 302 with the film 12 sealed and unshrunk passes the non-illustrated heat tunnel where the film 12 is shrunk under heat and adheres to the entire surface of the article 3. At that time, since air inside the film 12 escapes out via the non-sealed portions of the point seal region PS, the shrinking of the film 12 can be performed without any problem. Further, during this terminal shrinking process, the film 12 is shrunk greatly in all directions until the point seal region PS adheres closely to the surface of the article 3 so that the sealed portions closes the confronting non-sealed portions. After the thermal shrinking process, the resulting package assumes a virtually perfectly sealed posture.

Although the film of the package is shown in the views in an unshrunk state, the package in this state passes the heat tunnel via the sealing unit. Inside the heat tunnel, the film is shrunk under heat to adhere to the article so that the point seal region PS apparently would be a mere single continuous seal, thus effectively preventing penetration of any harmful thing such as dust, which would have caused sanitary problems.

In the illustrated embodiment, the packaging machine disclosed in Japanese Utility Model Publication No. SHO 60-20567 was used. However this invention should by no means be limited to this specific form; for example, it may be a vertical-type packaging machine which draws a two-fold film perpendicularly downwardly from a film roll via guide rollers without inversion, inserts an article into the two-fold film from its portion opened by a suitable means, further draws the film by the weight of the article and cuts the film by fusing by an L-shape sealer. In another alternative form, it may be a packaging machine of the type which opens a two-fold film reversely in a former, aligning opposite side edges of the film along the upper surface of a closure strip with being inserted under a conveyer belt and draws the film in this state until its leading end passes under a sealing unit from the front end of the former. Of course the method of this invention may be carried out manually.

As is apparent from the foregoing description, according to the method of this invention, since the thermal shrinking process is done after one end portion of an unshrunk film of a package is sealed at staggering seal points, air inside the film escapes from the non-sealed portions of the point seal region during the thermal shrinking process so that the film can be shrunk without any difficulty. Further, upon completion of the thermal shrinking process, the point seal region is perfectly blocked due to the shrinking of the film as the non-sealed portions are closed by their confronting sealed portions. Therefore, the method of this invention is remarkably simple in process, compared to the conventional method, and is particularly useful from an economical point of view. Since there is no air-escaping hole in the surface of the completed package, it has an excellent appearance and assumes a perfectly sealed condition so that unless the film is broken, any harmful thing such as dust is prevented from penetrating into the package, which would have caused sanitary problems.

## Claims

1. A method of manufacturing a sealed and shrunk package (3-1), comprising the steps of:
(a) wrapping an article (3) with a plastic film (12) fusible and shrinkable under heat;
(b) sealing the plastic film (12) at predetermined staggering seal points adjacent to at least one side of the article (3);
(c) cutting the plastic film (12) along a predetermined line adjacent to and outside the predetermined staggering seal points; and
(d) then treating the plastic film (12) by a thermal shrinking process.

2. A sealed and shrunk package wrapping an article (3) with a plastic film (12) sealed at staggering seal points adjacent to at least one side of the article (3) and hermally shrunk.
